# EUROPEAN PATENT APPLICATION

(11) **EP 2 131 235 A1**
(43) Date of publication of application: **09.12.2009**
(21) Application number: 08711173.8
(22) Date of filing: 13.02.2008
(51) Int. Cl.: G02F 1/37, G02B 6/42

(54) **SECOND HARMONIC WAVE GENERATING APPARATUS AND METHOD FOR MANUFACTURING THE SAME**

(30) Priority: 30.03.2007 JP 2007092811
(71) Applicant: Konica Minolta Opto, Inc., Hachioji-shi, Tokyo 192-8505 (JP)
(72) Inventor: OZEKI, Yukihiro, Hachioji-shi Tokyo 192-8505 (JP); NAGAI, Fumio, Hachioji-shi Tokyo 192-8505 (JP)
(74) Representative: Henkel, Feiler & Hänzel
(86) International application number: PCT/JP2008/052315
(87) International publication number: WO 2008/126467

(57) **Abstract**

Provided is a second harmonic wave generating apparatus which positions an optical waveguide in a light source apparatus, facilitates fixing, reduces the size of the apparatus configuration and simplifies the configuration. The second harmonic generation device is provided with a case having an opening; the light source apparatus fixed to the case; a sleeve,-which stores in a center hole a nonlinear optical crystal chip, which has the optical waveguide propagating light outputted from the light source apparatus and converting it into second harmonic wave light, and has an outer shape to be fitted to play in the opening; and a coupling optical system arranged in the case for coupling the light outputted from the light source apparatus with the optical waveguide, after the sleeve is inserted into the opening and the position adjusted, the sleeve is fixed to the case.

## Description

### TECHNICAL FIELD

The present invention relates to a second harmonic generation device and a method for manufacturing the same.

### BACKGROUND

As described, for example, in Patent Document 1 (in a paragraph 0003 and Fig. 8), the second harmonic generation device generates the second harmonic wave, by passing light from a light source through a nonlinear optical crystal.

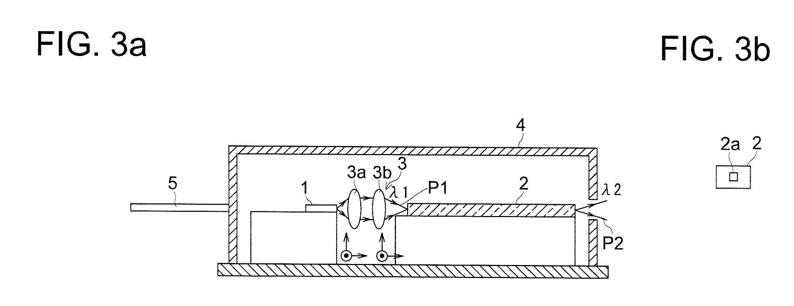

Fig. 3a shows an example of a basic constitution of the second harmonic generation device.

As shown in Fig. 3a, the second harmonic generation device comprises a light source apparatus 1 such as a semiconductor laser; a nonlinear optical crystal chip 2 having a high-dielectric constant; and a coupling optical system 3 for coupling light P1 generated from the light source apparatus 1 with an optical waveguide of the nonlinear optical crystal chip 2, and is composed of a case 4 with the above elements being stored therein. Outside the case 4, an electrode terminal 5 is provided.

When light P1 of wavelength λ1 passes through the optical waveguide of the nonlinear optical crystal chip 2, the higher harmonics exhibiting an integral multiple of the input wavelength λ1 are generated by a weak nonlinear response of oscillation of dielectric polarization. Of the above harmonics, the second harmonic wave light P2 (λ2 = (λ1)/2) with relatively strong intensity can be obtained.

Fig. 3b shows a cross section of the nonlinear optical crystal chip 2. The width of an optical waveguide 2a of the nonlinear optical crystal chip 2 is as very small as one half to one third of a single mode fiber. In order to achieve a high-efficiency light coupling, at the input terminal of the optical waveguide 2a, the fundamental wave light P1 is required to be focused at a portion having an area of about 25% to about 10% of that of a core of the single mode fiber.

On the one hand, in an assembling process, it is difficult to fix the light source apparatus 1 and the nonlinear optical crystal chip 2 in a position relative to each other where a high-efficiency light coupling can be obtained.

To that end, the coupling optical system 3 is disposed between the light source apparatus 1 and the nonlinear optical crystal chip 2. After the assembling process being completed, the light path is adjusted by the coupling optical system 3 so that the fundamental wave light P1 is coupled with the optical waveguide 2a.

The coupling optical system 3 comprises one or a plurality of lenses 3a and 3b which were made movable in uniaxial to triaxial directions by actuators such as SIDM. By adjusting the lens positions by regulating the actuator from outside, a focal position of the fundamental wave light P1 entering the optical waveguide 2a is adjusted so that the fundamental wave light P1 is adequately coupled with the optical waveguide 2a.

However, as is also described in Patent Document 1, it is still an important issue to achieve high-accuracy positioning of the light source apparatus 1 and the nonlinear optical crystal chip 2.

Described in Patent Document 1 is a method in which an optical waveguide type wavelength conversion device (SHG device), in which an optical waveguide was constituted by a nonlinear optical crystal, is adsorbed on a collet, which is then arranged on a sub-mount through ultraviolet curable adhesives, positioning is carried out by moving the aforesaid collet, and then the adhesives are irradiated by ultraviolet light to fix it. In the invention described in Patent Document 1, displacement between the collet and the device was prevented by making the holding force of the collet larger than the frictional force received from the adhesives at a time of the positioning.
Patent Document 1: Japanese Patent Application Publication No. 2004-12992

### DISCLOSURE OF THE INVENTION

### ISSUES TO BE SOLVED BY THE INVENTION

However, the conventional technologies still exhibit lower productivity due to difficulty in positioning and fixing. When the apparatus is made larger, it increases the tendency that the center axis thereof is out of alignment due to mechanical distortion such as warpage of the sub-mount.

Therefore, it is desired to further facilitate positioning and fixing to increase the productivity, and to make the constitution of the apparatus smaller and simplified.

The present invention has been achieved in consideration of the above problems existing in the conventional technologies, and, regarding the second harmonic generation device, it is an issue of the present invention to facilitate positioning and fixing of an optical waveguide with respect to a light source apparatus, to make the constitution of production equipment smaller and simplified, and in addition, to improve assembly accuracy, reliability, lower cost, and productivity.

### MEASURES TO SOLVE THE PROBLEMS

The invention described in Claim 1 to solve the above issue is second harmonic generation device comprising a case having an opening, a light source apparatus fixed to the case, a sleeve storing in its center hole a nonlinear optical crystal chip in which an optical waveguide propagating light irradiated from the light source apparatus and converting the light into a second harmonic wave light is formed, and having an outer shape which is fitted with play to the opening; and a coupling optical system which is disposed in the case and couples light irradiated from the light source apparatus with the optical waveguide, wherein the sleeve is inserted into the opening and fixed with respect to the case.

The invention described in Claim 2 is the second harmonic generation device of Claim 1, wherein the sleeve is fixed to the case by adhesives or welding.

The invention described in Claim 3 is the second harmonic generation device described in Claim 1 wherein the coupling optical system has movable lenses in which an image point is adjustable in a biaxial directions perpendicular to an axial direction of the optical waveguide.

The invention described in Claim 4 is the second harmonic generation device described in Claim 1 wherein the light source apparatus is housed in a TO package which is used for the LD package for CD light source, a light output end of the TO package is disposed in the case, and the coupling optical system is mounted on the TO package.

The invention described in Claim 5 is the second harmonic generation device described in Claim 1 wherein the case has a cylindrical body arranged concentrically with the opening.

The invention described in Claim 6 is a method for producing the second harmonic generation device of Claims 1 to 5, comprising; arranging the coupling optical system in the case, fixing the light source apparatus to the case, inserting the sleeve into the opening, then, positioning the optical waveguide with respect to the light source apparatus by adjusting the position of the sleeve with respect to the case, and then, fixing the sleeve to the case.

### EFFECTS OF THE INVENTION

According to the present invention, the second harmonic generation device can utilize a conventional assembling apparatus for a communication LD module by adopting a method and a constitution in which the sleeve, which stored the nonlinear optical crystal chip in which an optical waveguide was formed in the center hole, is positioned and fixed by inserting it into the opening of the case in which a light source apparatus is fixed, and as a result the second harmonic generation device exhibits effects that the sleeve can be fixed by adhesion or welding with grabbing the sleeve, resulting in a smaller and simplified constitution of a production apparatus, as well as improvement in assembly accuracy, reliability, lower cost, and productivity.

### BRIEF DESCRIPTION OF THE DRAWINGS

Fig. 1 is a longitudinal sectional view of the second harmonic generation device relating to one embodiment of the present invention.
Fig. 2 is a perspective view of the second harmonic generation device relating to one embodiment of the present invention.
Fig. 3a is a cross-sectional view of an example of a basic configuration of the conventional second harmonic generation device, and Fig. 3b is a cross-sectional view of the nonlinear optical crystal chip.
Fig. 4 is a perspective view of the driving apparatus to drive lenses relating to one embodiment of the present invention.
Fig. 5 is a perspective view of the stacked-type piezoelectric actuator relating to one embodiment of the present invention.
Fig. 6 is a waveform chart showing driving voltage pulses relating to one embodiment of the present invention.

### DESCRIPTION OF ALPHANUMERIC DESIGNATIONS

1: a light source apparatus
2: a nonlinear optical crystal chip
10: a TO package
12: a case
12C: an opening
13: a coupling optical system
14: a sleeve
P1: fundamental wave light
P2: second harmonic wave light
BS: a base
C: an electrode
DH1: a lens holder
DH2: a lens holder
DH1a: a joining section
DH1b: an edge groove
DH2a: a joining section
DH2b: an edge groove
DR: a driving apparatus
HD: a support
HG: a groove
L1: a first lens
L2: a second lens
PE: a piezoelectric ceramic
PZ: a piezoelectric actuator
S: an aperture stop
XDS: an X-axis drive shaft
XPZ: an X-axis piezoelectric actuator
YDS: a Y-axis drive shaft
YPZ: a Y-axis piezoelectric actuator

### DESCRIPTION OF THE PREFERRED EMBODIMENTS

Referring to the drawings, one embodiment of the present invention is described below. The description below is one embodiment of the present invention, and the invention is not limited to it.

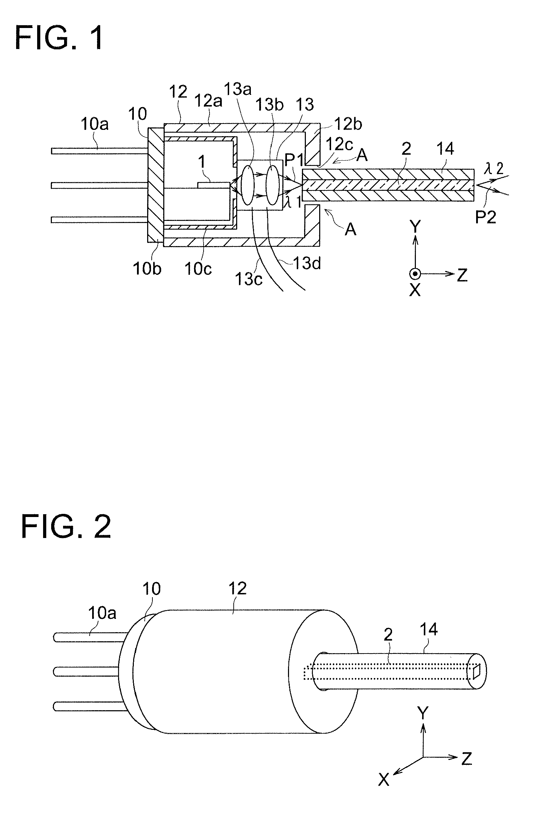

Fig. 1 is a longitudinal sectional view of the second harmonic generation device relating to one embodiment of the present invention. Fig. 2 is a perspective view of the second harmonic generation device relating to one embodiment of the present invention. The X-Y-Z axes common to Figs. 1 and 2 are described. The direction of the optical axis is represented by Z axis.

The TO package 10 is constituted having a terminal post 10a, a stem 10b, and a cap 10c, and the light source apparatus 1 is sealed in the cap 10c. As the light source apparatus 1, a semiconductor laser is used. The light source apparatus 1 and the terminal post 10a are constituted so that they are electrically connected to each other. The light source apparatus 1 is sealed in the cap 10c with sealant being filled to form a packaging. An exit window of light emitted from the light source apparatus 1 is provided at the middle part of the cap 10c.

The case 12 comprises a cylinder section 12a, and an upper end part 12b which covers one end of the cylinder section 12a, provided that the opening 12c is formed at the middle part of the upper end part 12b to insert the sleeve 14. The opening 12c and the cylinder section 12a are disposed concentrically.

The nonlinear optical crystal chip 2, in which the optical waveguide is formed, is housed in the center hole of the sleeve 14 and fixed by adhesives, which optical waveguide propagate the light P1 emitted from the light source apparatus 1 and converts it into the second harmonic wave light P2.

The shape of the cross-section perpendicular to the Z-axis of the opening 12c and the sleeve 14 is a circle. The outer diameter of the sleeve 14 is made slightly smaller than the inner diameter of the opening 12c so that the sleeve 14 can be fitted to play in the opening 12c. That is, a play is provided between the opening 12c and the sleeve 14 so that the relative position between the case 12 and the sleeve 14 can be adjustable.

The shape of the sleeve 14 can be, other than the cylindrical form as shown in Fig. 2, a shape whose external form is a rectangular parallelepiped. As the sleeve 14, a tubular body with a hole passing through in a longitudinal direction at the center can be adopted, whatever the shape of the cross-section of the tubular body might be. Since the nonlinear optical crystal chip 2 is fragile, the quality of the material of the sleeve 14 is required to the extent that it can be a protective member for the sleeve 14. It is preferable that metals such as stainless steel is used for the material for the sleeve 14, and the sleeve is processed with a high degree of accuracy so that the center hole of the sleeve 14 is matched with the external form of the nonlinear optical crystal chip 2.

The coupling optical system 13 is constituted having the lens 13a, lens 13b, and SIDM (Smooth Impact Drive Mechanism; Registered Mark, not illustrated) unit which minutely shifts those lenses 13a and 13b. Further, terminals 13c and 13d of the SIDM unit are extended. The light output end of the TO package 10 is disposed in the case 12, and the coupling optical system 13 is mounted on the light output end of the TO package. That is, the lenses 13a and 13b are fixed to the movable section of each of the SIDM units, and the fixing section of the SIDM unit is mounted on the light output end of the TO package 10 and fixed. However, the SIDM units or fixing members are disposed so as not to block the optical path.

For example, the movable direction of the lens 13a controlled by one SIDM unit is set to the X axis direction, and the movable direction of the lens 13b controlled by another SIDM unit is set to the Y axis direction.

A single lens, which replaces the lens 13a and lens 13b, may be used, whereby the single lens may be made movable to each of the X-axis and the Y-axis directions.

The coupling optical system 13 may be arbitrarily constituted so that a lens is also movable to the Z-axis direction, and may be provided with three lenses or more.

That is, the coupling optical system 13 has a single lens or is composed of two lenses or more to constitute a movable lens unit in which lenses are movable at least in the X-axis and the Y-axis directions, whereby the coupling optical system 13 is allowed to have movable lenses whose image points are adjustable in the directions of two axes of X and Y, both of which are perpendicular to the Z-axis, which is an axis direction of the optical waveguide.

Now their assembling will be described.

The coupling optical system 13 is attached and fixed to the TO package 10. By covering the case 12 thereon, the coupling optical system 13 is disposed within the case 12, and then the case 12 is fixed to the TO package 10. As a result, the light source apparatus 1 is fixed to the case 12.

Next, the sleeve 14 is inserted into the opening 12c.

Then, a portion of the sleeve 14 being out of the case 12 is held by an axial alignment means, and a position of the sleeve 14 with respect to the case 12 is adjusted by the axial alignment means. This is an adjustment to position the optical waveguide of the nonlinear optical crystal chip 2 with respect to the light source apparatus 1. The adjustment is carried out regarding the Z-axis direction, an angle around the X-axis, and an angle around the Y-axis.

After the completion of the position adjustment of the sleeve 14, the sleeve 14 is fixed to the case 12. The fixing thereof is carried out by adhesives or welding of the junction A of the sleeve 14 with the case 12.

By the above steps, the assembling of the apparatus of the present embodiment is completed. The axial alignment with respect to the X-axis direction and the Y-axis direction is carried out by adjusting the image point of the fundamental wave light P1 via the coupling optical system 13. By the adjustment of the sleeve 14 and by the adjustment via the coupling optical system 13, the fundamental wave light P1 is coupled with the optical waveguide of the nonlinear optical crystal chip 2 with high efficiency.

When the present apparatus is mounted on a mounting board, it is preferable that the terminals 13c and 13d, as well as the terminal 10a, are connected to the board so that the coupling optical system 13 can be controlled. After the apparatus was mounted, change in the axial alignment caused with ageing and by temperature change is corrected by controlling the coupling optical system 13.

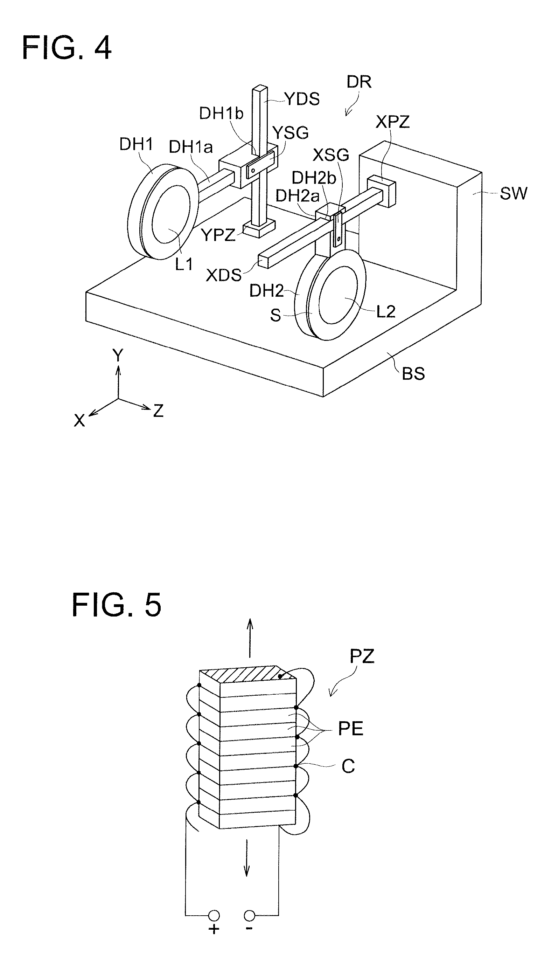

Next, there will be described an example of a constitution of the first lens 13a and the second lens 13b, and SIDM (Smooth Impact Drive Mechanism) unit which is an actuator to minutely shift those lenses 13a and 13b. Fig. 4 is a perspective view of the drive unit DR which drives lenses. The second lens L2 and the aperture stop S are held by the lens holder DH2 so that they shift in an integrated fashion. The lens holder DH2, which can be a movable member, has the joining section DH2a which receives driving force.

At the end portion of the joining section DH2a, there is provided the edge groove DH2b, whose shape corresponds to the X-axis drive shaft XDS having a quadrangular prism shape, and which contacts with the X-axis drive shaft XDS. Further, a plate spring XSG is attached to the end portion of the joining section DH2a in a manner to sandwich the X-axis drive shaft XDS between the above plate spring XSG and the edge groove DH2b. The X-axis drive shaft XDS, which is a driving member being sandwiched between the joining section DH2a and the plate spring XSG, extends to the direction (the X-axis direction) perpendicular to the optical axis of the second lens L2, and is properly pressed by an urging force of the plate spring XSG. One end of the X-axis drive shaft XDS is a free end, and the other end is connected to the X-axis piezoelectric actuator XPZ which is an electric-mechanic conversion element. The X-axis piezoelectric actuator XPZ is attached to the side wall SW which is vertically provided on the base BS.

On the other hand, the first lens L1 is held by the lens holder DH1, whereby they move in an integrated fashion. The lens holder DH1, which can be a movable member, has the joining section DH1a which receives driving force.

At the end portion of the joining section DH1a, there is provided the edge groove DH1b, whose shape corresponds to the Y-axis drive shaft YDS having a quadrangular prism shape, and which contacts with the Y-axis drive shaft YDS. Further, a plate spring YSG is attached in a manner to sandwich the Y-axis drive shaft YDS between the above plate spring YSG and the edge groove DH1b. The Y-axis drive shaft YDS, which is a driving member being sandwiched between the joining section DH1a and the plate spring YSG, extends to the direction (the Y-axis direction) perpendicular to the X-axis as well as the optical axis of the first lens L1, and is properly pressed by an urging force of the plate spring YSG. One end of the Y-axis drive shaft YDS is a free end, and the other end is connected to the Y-axis piezoelectric actuator YPZ which is an electric-mechanic conversion element. The Y-axis piezoelectric actuator YPZ is attached to the upper surface of the base BS.

The piezoelectric actuators XPZ and YPZ are composed of a laminated piezoelectric ceramics formed by PZT (lead zirconate titanate) and the like. The piezoelectric ceramics is polarized in itself due to disagreement of the center of the positive charges with the center of the negative charges in the crystal lattices thereof, and the polarization leads to the characteristics of elongation by application of voltage in the polarized direction. However, the deformation of the piezoelectric ceramics in the direction described above is very small, and it is difficult to drive the driving member with the above amount of the deformation. Therefore, as shown in Fig. 5, a laminated type piezoelectric actuator, having a structure such that a plurality of piezoelectric ceramics PE are stacked and electrodes C are parallely-connected between them, has been provided as practicable. In the present embodiment, above laminated type piezoelectric actuator PZ is used as a driving source.

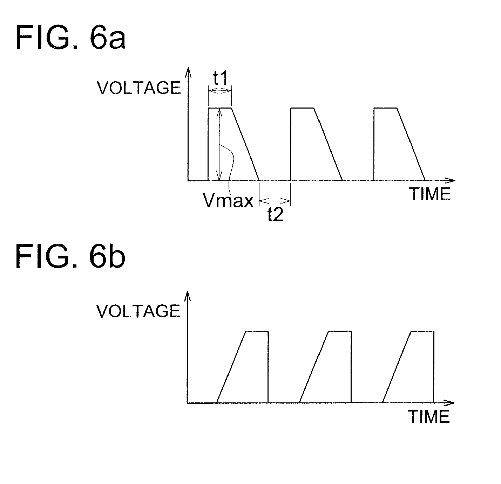

Next, a driving method of the Lenses L1 and L2 will be described. In general, the amount of deformation of the laminate type piezoelectric actuator is small during application of voltage, but the generation force thereof is large and its response is also sharp. Therefore, when pulse voltage, which has an approximate sawtooth waveform having a sharp rise and slow decay as shown in Fig. 6a, is applied to the piezoelectric actuator XPZ, the piezoelectric actuator XPZ rapidly stretches at a time of the pulse rise, and more slowly shrinks at a time of the pulse decay than at a time of the pulse rise. Therefore, when the piezoelectric actuator XPZ stretches, the X-axis drive shaft XDS is pushed out forward in Fig. 4 by the impact thereof; but the joining section DH2a of the lens holder DH2, which holds the lens L2 and the aperture stop S, and the plate spring XSG do not move together with the X-axis drive shaft XDS due to the inertia thereof; and instead they stay in that position with a slip caused between the X-axis drive shaft XDS and them (or may move just a little in some cases). In the meantime, since the X-axis drive shaft XDS returns more slowly at a time of decay of the pulse than at a time of rise, the joining section DH2a and the plate spring XSG move backward in Fig. 4 integrally with the X-axis drive shaft XDS without a slip with respect to the X-axis drive shaft XDS. That is, by application of a pulse with the frequency set at a few hundred Hertz through tens of thousands of Hertz, the lens holder DH2, which holds the lens L2 and the aperture stop S, can be continuously shifted in the X-axis direction at a desired speed.

Similarly, when pulse voltage, which has an approximate sawtooth waveform having a sharp rise and slow decay as shown in Fig. 6a, is applied to the piezoelectric actuator YPZ, the piezoelectric actuator YPZ rapidly stretches at a time of the pulse rise, and more slowly shrinks at a time of the pulse decay than at a time of the pulse rise. Therefore, when the piezoelectric actuator YPZ stretches, the Y-axis drive shaft YDS is pushed out upward by the impact thereof; but the joining section DH1a of the lens holder DH1, which holds the lens L1, and the plate spring YSG do not move together with the Y-axis drive shaft YDS due to the inertia thereof; and instead, they stay in that position with a slip caused between the Y-axis drive shaft YDS and them (or may move just a little in some cases). In the meantime, since the Y-axis drive shaft YDS returns more slowly at a time of decay of the pulse than at a time of rise, the joining section DH1a and the plate spring YSG move downward in Fig. 4 integrally with the Y-axis drive shaft YDS without a slip with respect to the Y-axis drive shaft YDS. That is, by application of a pulse with the frequency set at a few hundred Hertz through tens of thousands of Hertz, the lens holder DH1, which holds the lens L1, can be continuously shifted in the Y-axis direction at a desired speed.

Namely, by applying a predetermined pulse input, the lens L2 and the aperture stop S can be continuously shifted at a desired speed in the X-axis direction and lens L1 can be continuously shifted in the Y-axis direction, respectively. In the meantime, as the above clearly indicates, when a pulse voltage, having a slow rise and sharp decay as shown in Fig. 6b, is applied, lens holders DH1 and DH2 can be shifted in the opposite directions. In the present embodiment, since both the X-axis drive shaft XDS and the Y-axis drive shaft YDS are made to have a quadrangular prism shape (a whirl stopping mechanism), the whirl stopping functions of the lens holders DH1 and DH2 are filled and tilts of the lens L2 and the lens L1 are suppressed, therefore it is unnecessary to provide a separate guide shaft.

## Claims

1. A second harmonic generation device comprising:
a case having an opening;
a light source apparatus fixed to the case;
a sleeve storing in its center hole a nonlinear optical crystal chip in which an optical waveguide propagating light irradiated from the light source apparatus and converting the light into a second harmonic wave light is formed, and having an outer shape which is fitted with play to the opening; and
a coupling optical system which is disposed in the case and couples light irradiated from the light source apparatus with the optical waveguide,
wherein the sleeve is inserted into the opening and fixed with respect to the case.

2. The second harmonic generation device of Claim 1,
wherein the sleeve is fixed to the case by adhesives or welding.

3. The second harmonic generation device of Claim 1,
wherein the coupling optical system has movable lenses in which an image point is adjustable in a biaxial directions perpendicular to an axial direction of the optical waveguide.

4. The second harmonic generation device of Claim 1,
wherein the light source apparatus is housed in a TO package, a light output end of the TO package is disposed in the case, and the coupling optical system is mounted on the TO package.

5. The second harmonic generation device of Claim 1,
wherein the case has a cylindrical body arranged concentrically with the opening.

6. A method for producing the second harmonic generation device of Claims 1 to 5, comprising;
arranging the coupling optical system in the case,
fixing the light source apparatus to the case,
inserting the sleeve into the opening,
then, positioning the optical waveguide with respect to the light source apparatus by adjusting the position of the sleeve with respect to the case,
and then, fixing the sleeve to the case.
